Europäisches Patentamt

(19) European Patent Office

Office européen des brevets

(11) Numéro de publication: **0 080 404**
**B1**

(12) **FASCICULE DE BREVET EUROPEEN**

(45) Date de publication du fascicule du brevet:
**23.10.85**

(21) Numéro de dépôt: **82402091.1**

(22) Date de dépôt: **17.11.82**

(51) Int. Cl.⁴: **F 02 K 1/04,** F 02 K 1/80

(54) **Ensemble constitué de deux pièces de révolution en matériaux ayant des coefficients de dilatation différents, reliées entre elles.**

(30) Priorité: **19.11.81 FR 8121649**

(43) Date de publication de la demande:
**01.06.83 Bulletin 83/22**

(45) Mention de la délivrance du brevet:
**23.10.85 Bulletin 85/43**

(84) Etats contractants désignés:
**DE FR GB**

(56) Documents cités:
**FR - A - 1 217 638**
**FR - A - 1 313 324**
**FR - A - 1 458 204**
**FR - A - 1 545 781**
**FR - A - 1 551 357**
**GB - A - 587 512**
**GB - A - 882 186**
**GB - A - 1 503 394**
**GB - A - 2 007 773**

(73) Titulaire: **SOCIETE NATIONALE D'ETUDE ET DE CONSTRUCTION DE MOTEURS D'AVIATION, "S.N.E.C.M.A.", 2 Boulevard Victor, F-75015 Paris (FR)**

(72) Inventeur: **Soligny, Marcel Robert, 136, boulevard Jean Mermoz, F-94150 Chevilly-Larue (FR)**

(74) Mandataire: **Moinat, François, S.N.E.C.M.A. Service des Brevets Boîte Postale 81, F-91003 Evry Cedex (FR)**

## Description

L'invention concerne un ensemble constitué de deux pièces de révolution concentriques et coaxiales reliées entre elles par des noyens de fixation, ces pièces étant en des matériaux tels que la première pièce intérieure a un coefficient de dilatation nettement inférieur à celui de la seconde pièce extérieure, ces pièces étant, en particulier un capot intérieur d'éjection fixé sur le carter d'échappement d'un turboréacteur.

La tendance actuelle, dans l'industrie aéronautique, consiste à alléger au maximum les cellules et les moteurs en utilisant des matériaux composites de faible densité. La diminution de poids entraîne une diminution de la consommation de carburant et une augmentation de la charge transportée. Les avions d'armes font largement appel à ces matériaux, en particulier pour des éléments de voilure et de cellule. Par contre, leur utilisation dans les moteurs a été peu étendue, par suite des difficultés d'association avec les matériaux classiques à coefficient de dilatation relativement élevé.

Le brevet français 2 408 037, par exemple, décrit la liaison d'une tuyère orientable en carbone tissé à une structure d'éjection. La tuyère est ceinturée par des anneaux en ciment réfractaire. L'un des anneaux est fixé à la structure par des butées souples et, l'autre, aux vérins d'orientation par l'intermédiaire d'un caisson métallique. Le fait que la tuyère soit reliée par des organes mobiles et déformables au canal d'éjection, permet la libre dilatation axiale aussi bien que radiale de ce dernier, sans pour cela soumettre la pièce en carbone tissé à des contraintes inacceptables.

On a essayé de remplacer d'autres éléments du moteur par des pièces en matériau composite et, en particulier, le cône ou le capot d'éjection interne qui prolonge le carter d'échappement. Des essais ont montré qu'il n'était pas possible de relier le capot au carter métallique par des dispositifs connus, par exemple du brevet français numéro 1 458 204, pour fixer une chemise de protection thermique dans une chambre de post-combustion. Le système à vis et glissière utilisé permet bien la dilatation axiale, mais n'accepte que très peu la dilatation radiale. Ce dispositif n'est utilisable que pour des matériaux métalliques ayant des allongements notables.

FR-A-1 217 638 décrit le montage d'un divergent de tuyère au moyen d'une liaison à rotule annulaire en amont sur une partie de réacteur et au moyen d'une liaison coulissante par dés entre des guides ou d'une liaison articulée par biellettes en aval sur une partie de cellule.

FR-A-1 551 357 décrit le montage d'une chambre de combustion au moyen d'un palier sphérique en amont et en aval par une fixation au bâti de support du moteur au moyen de biellettes à deux fourches aux extrémités, reliées à des pattes par broches et de brides se recouvrant.

FR-A-1 545 781 décrit un dispositif de fixation d'un corps central à l'intérieur d'un organe creux comportant un ensemble déformable à structure complexe sur lequel sont articulés au moins deux groupes de biellettes.

Si l'utilisation de types particuliers de biellettes est connue en soi, aucun dispositif connu n'est toutefois pleinement satisfaisant pour assurer dans l'application envisagée par la présente demande une bonne concentricité de la première pièce par rapport à la seconde pièce tout en laissant libres les déplacements radiaux d'origine thermique lorsque la pièce intérieure a un coefficient de dilatation thermique nettement inférieur à celui de la pièce extérieure.

Ces résultats sont par contre obtenus grâce à l'ensemble constitué de deux pièces de révolution concentriques et coaxiales conforme à l'invention dont les moyens de fixation reliant ces pièces entre elles comportent au moins trois biellettes dont les extrémités de chacune s'articulent sur des axes maintenus par des éléments de fixation sur la première et la seconde pièces et en ce que les parties adjacentes coaxiales de la première et de la seconde pièces comportent des portées cylindriques respectivement intérieure et extérieure coopérantes.

Les explications et les figures données ci-après à titre d'exemple, permettront de comprendre comment l'invention peut être réalisée.

La figure 1 montre une coupe partielle d'un capot d'éjection et d'un carter d'échappement reliés par des moyens de fixation conforme à l'invention.

La figure 2 est une vue selon II de la figure 1 d'une partie des moyens de fixation.

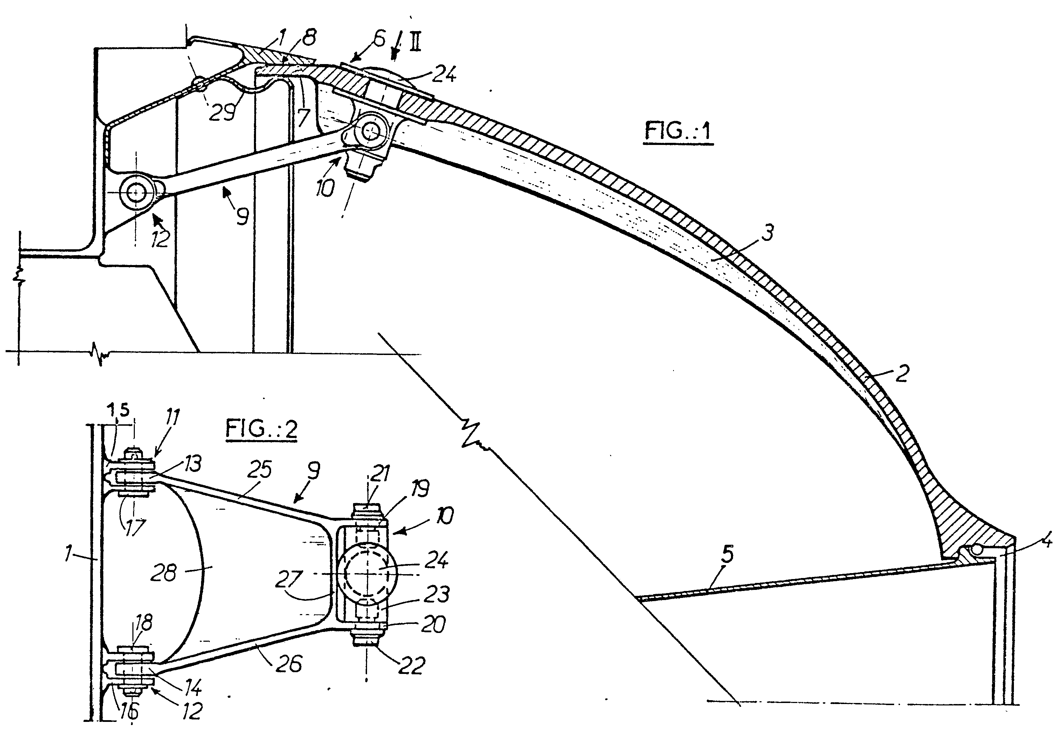

La figure 1 représente, en demi-coupe, le carter d'échappement 1 sur lequel est fixé le capot d'éjection intérieur 2. Ces deux pièces sont de révolution autour de l'axe du réacteur.

Ledit capot est en un matériau composite, par exemple carbone/carbone ou céramique et est relié au carter qui est classiquement en un métal inoxydable résistant à la température. Selon l'exemple de réalisation représenté, le capot présente des nervures internes 3 et porte une ouverture coaxiale 4 à son sommet dans laquelle débouche le canal 5 d'évacuation de l'air de ventilation interne de la ligne d'arbre.

Le bord périphérique extérieur 6 du capot comporte une portée cylindrique 7 coopérant avec une portée semblable 8 prévue sur le bord périphérique intérieur du carter d'échappement 1.

Ces portées constituent un élément des moyens de fixation selon l'invention et permettent la dilatation axiale du carter indépendamment de celle du capot.

Le capot est relié par trois biellettes 9 dont les extrémités 10, 11, 12 de chacune s'articulent sur des axes maintenus respectivement par des éléments de fixation 23, 15, 16 sur le capot et le carter.

Selon une forme de réalisation représentée figure 2, la biellette 9 est en forme de triangle isocèle et présente sur sa base, voisine du carter 1, un bord concave permettant un bon dégagement des yeux 13, 14 situés dans des plans parallèles et perpendiculairement au plan de la biellette. Ces yeux sont articulés aux chapes 15, 16 fixées au carter 1 par des axes 17, 18. Le sommet de la biellette est tronqué et porte dans des plans, parallèles à ceux des yeux, 13, 14, des yeux 19, 20 mobiles autour des pivots 21, 22 maintenus dans une pièce d e fixation 23 fixée à l'intérieur du capot 2 par un boulon 24 le traversant. La tête du boulon et la pièce de fixation sont séparées de la paroi du capot par des rondelles répartissant les efforts de compression.

Selon l'exemple de réalisation figurée, la biellette triangulaire est une pièce moulée formée du deux poutres latérales 25, 26 entretoisées par une poutre transversale 27 et une cloison 28.

Les biellettes sont préférentiellement au nombre de trois et disposées à 120° sur la périphérie du carter et du capot et permettent la dilatation thermique radiale du carter tout en assurant une bonne concentricité du capot par rapport au carter. Bien entendu, on ne sortirait pas du cadre de la présente invention en employant un nombre de biellettes analogues supérieur à trois, les biellettes étant régulièrement réparties sur la périphérie du carter.

Par suite des dilatations différentes du carter et du capot, l'étanchéité entre les portées 7 et 8 est peu ou pas assurée. Afin d'éviter que les gaz de combustion ne pénètrent dans le capot, il est prévu un dispositif d'étanchéité 29 constitué d'une couronne de lamelles élastiques fixée à l'intérieur du carter d'échappement et venant appuyer contre le bord intérieur du capot d'éjection.

Les moyens de fixation, selon l'invention, permettent dans l'exemple de réalisation décrit, la fixation d'un capot d'éjection en composite de carbone/carbone ayant un coefficient de dilatation de l'ordre de $6 \times 10^{-6}$ sur un carter d'échappement métallique de coefficient de dilatation de d'ordre de $16,5 \times 10^{-6}$, l'ensemble étant soumis à des températures de l'ordre de 900° C.

## Revendications

1. Ensemble constitué de deux pièces de révolution concentriques et coaxiales reliées entre elles par des moyens de fixation, ces pièces étant en matériaux tels que la première pièce intérieure a un coefficient de dilatation nettement inférieur à celui de la seconde pièce extérieure, ces pièces étant, en particulier, un capot intérieur d'éjection en matériau composite fixé sur un carter d'échappement métallique d'un turboréacteur, caractérisé en ce que les moyens de fixation comportent au moins trois biellettes (9) dont les extrémités de chacune (11, 12, 10) s'articulent sur des axes (17, 18, 21—22) maintenus par des éléments de fixation (15, 16, 23) sur la première (2) et la seconde (1) pièces, et en ce que les parties adjacentes coaxiales de la première et de la seconde pièces comportent des portées cylindriques (7, 8) respectivement extérieure (7) et intérieure (8), coopérantes.

2. Ensemble selon la revendication 1, caractérisé en ce que les biellettes sont en forme de triangle isocèle tronqué dont les sommets portant des yeux (13, 14, 19, 20) sont disposés dans des plans parallèles entre eux et perpendiculairement au plan de la biellette.

3. Ensemble selon la revendication 1 ou 2, caractérisé en ce qu'au moins une partie des éléments de fixation sont des chapes (15, 16).

4. Ensemble selon l'une des revendications 1 à 3, caractérisé en ce qu'au moins une partie des éléments de fixation est constituée par une pièce de fixation (23) susceptible de recevoir deux pivots (21, 22).

5. Ensemble selon l'une des revendications 2 à 4, caractérisé en ce que la biellette est une pièce formée de deux poutres latérales (25, 26) entretoisées par une poutre transversale (27) et une cloison (28).

6. Ensemble selon l'une des revendications 1 à 5, caractérisé en ce qu'il comporte un dispositif d'étanchéité (29) fixé sur l'une des pièces de révolution et assurant l'étanchéité avec l'autre pièce.

7. Ensemble selon la revendication 6, caractérisé en ce que le dispositif d'étanchéité est formé par une couronne de lamelles élastiques.

## Patentansprüche

1. Zusammenbau zweier konzentrischer und koaxialer Rotationskörper, die durch Befestigungsmittel miteinander verbunden sind, wobei das Material des ersten inneren Rotationskörpers einen Ausdehnungskoeffizienten hat, der deutlich kleiner ist als derjenige des Materials des zweiten äußeren Rotationskörpers, und wobei die Rotationskörper im besonderen eine innere aus einem Verbundmaterial bestehende Auswurfhaube darstellen, die auf dem metallischen Auspuffgehäuse eines Turboreaktors befestigt ist, dadurch gekennzeichnet, daß die genannten Befestigungsmittel wenigstens drei Schwingarme (9) umfassen, deren Enden (11, 12, 10) auf Achsen (17, 18, 21—22) drehbar sind, welche von Befestigungselementen (15, 16, 23) an dem zweiten und dem ersten Rotationskörper (2 bzw. 1) gehalten sind, und daß die einander benachbarten koaxialen Teile des ersten und des zweiten Rotationskörpers eine äußere bzw. eine innere zylindrische Tragfläche (7 bzw. 8) besitzen, die zusammenwirken.

2. Zusammenbau nach Anspruch 1, dadurch gekennzeichnet, daß die Schwingarme die Form eines abgestumpften gleichschenkligen Dreiecks haben, dessen Ecken Ösen (13, 14, 19, 20) tragen, die in zueinander parallelen und zur Ebene des Schwingarms senkrechten Ebenen angeordnet sind.

3. Zusammenbau nach Anspruch 1 oder 2, dadurch gekennzeichnet, daß wenigstens ein Teil der Befestigungselemente von Gabelbügeln (15, 16) gebildet ist.

4. Zusammenbau nach einem der Ansprüche 1 bis 3, dadurch gekennzeichnet, daß wenigstens ein Teil der Befestigungselemente von einem Befestigungsteil (23) gebildet sind, das zwei Zapfen (21, 22) aufnehmen kann.

5. Zusammenbau nach einem der Ansprüche 2 bis 4, dadurch gekennzeichnet, daß der Schwingarm ein aus zwei seitlichen Trägern (25, 26) bestehendes Teil ist, die durch einen transversalen Träger (27) und eine Zwischenwand (28) fest miteinander verbunden sind.

6. Zusammenbau nach einem der Ansprüche 1 bis 5, dadurch gekennzeichnet, daß eine Dichtungsvorrichtung (29) vorgesehen ist, die an einem der Rotationskörper befestigt ist und die Dichtheit gegenüber dem anderen Rotationskörper gewährleistet.

7. Zusammenbau nach Anspruch 6, dadurch gekennzeichnet, daß die Dichtungsvorrichtung von einem elastischen Lamellenkranz gebildet ist.

**Claims**

1. Assembly comprising two concentric, co-axial and rotationally symmetric members connected together by securing means, said members being of materials such that the first, inner member has an expansion coefficient substantially lower than that of the second, outer member, these members being, specifically, an injection hood of a composite material secured on to a metal exhaust casing of a turbo-reactor, characterised in that the securing means comprise at least three links (9), the ends of each of which (11, 12, 10) are pivoted on pins (17, 18, 21—22) held by mounting elements (15, 16, 23) on the first (2) and second (1) members, and in that the co-axial adjacent parts of the first and second members have respectively outer (7) and inner (8) cylindrical bearings (7, 8) which co-operate.

2. Assembly according to claim 1, characterised in that the links are in the shape of a truncated isosceles triangle, the apices of which have eyes (13, 14, 19, 20) and are disposed along planes parallel one with the other and perpendicular to the plane of the link.

3. Assembly according to claim 1 or 2, characterised in that at least one part of the securing elements are plates (15, 16).

4. Assembly according to one of claims 1 to 3, characterised in that at least one part of the securing elements is constituted by a securing member (23) able to receive two pivots (21, 22).

5. Assembly according to one of claims 2 to 4, characterised in that the link is a member formed of two lateral struts (25, 26) braced by a cross-strut (27) and a partition (28).

6. Assembly according to one of claims 1 to 5, characterised in that it comprises a sealing device (29) secured to one of the rotationally-symmetric members and ensuring sealing with the other member.

7. Assembly according to claim 6, characterised in that the sealing device is constituted by an annulus of resilient leaves.

FIG.:1

FIG.:2

0 080 404